# EUROPEAN PATENT SPECIFICATION

(11) **EP 4 047 901 B1**
(45) Date of publication and mention of the grant of the patent: **03.01.2024**
(21) Application number: 20888411.4
(22) Date of filing: 13.11.2020
(51) Int. Cl.: H04L 67/147, H04L 67/14, H04L 69/18, H04L 65/40, H04W 28/02, H04L 65/102, H04L 65/80, H04W 76/12

(54) **INFORMATION PROCESSING METHOD AND APPARATUS, AND COMPUTER-READABLE STORAGE MEDIUM**
INFORMATIONSVERARBEITUNGSVERFAHREN UND -GERÄT SOWIE COMPUTERLESBARES SPEICHERMEDIUM
PROCÉDÉ ET APPAREIL DE TRAITEMENT D'INFORMATIONS, ET SUPPORT DE STOCKAGE LISIBLE PAR ORDINATEUR

(30) Priority: 14.11.2019 CN 201911114730
(43) Date of publication of application: 24.08.2022
(73) Proprietor: ZTE Corporation, Shenzhen, Guangdong 518057 (CN)
(72) Inventor: SONG, Xueyan, Shenzhen, Guangdong 518057 (CN); ZHOU, Xingyue, Shenzhen, Guangdong 518057 (CN)
(74) Representative: Zoli, Filippo
(86) International application number: PCT/CN2020/128769
(87) International publication number: WO 2021/093863

(56) References cited:
- CN-A- 108 965 159
- CN-A- 109 104 448
- CN-A- 109 587 745
- CN-A- 110 417 840
- US-A1- 2019 191 330
- "3rd Generation Partnership Project; Technical Specification Group Services and System Aspects; Wireless and wireline convergence access support for the 5G System (5GS) (Release 16)", 3GPP STANDARD; TECHNICAL SPECIFICATION; 3GPP TS 23.316, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V16.0.0, 11 June 2019 (2019-06-11), pages 1-63, XP051753951, [retrieved on 2019-06-11]
- ERICSSON: "Procedures for 5G-RG", 3GPP DRAFT; S2-1901456_5WWC_23316_5G_RG_PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Santa Cruz, Tenerife, Spain; 20190225 - 20190301 19 February 2019 (2019-02-19), XP051610066, Retrieved from the Internet: URL:http://www.3gpp.org/ftp/tsg%5Fsa/WG2%5 FArch/TSGS2%5F131%5FTenerife/Docs/S2%2D190 1456%2Ezip [retrieved on 2019-02-19]
- "3rd Generation Partnership Project; Technical Specification Group Services and System Aspects Wireless and wireline convergence access support for the 5G System (5GS) (Release 16)", 3GPP Standard; Technical Specification; 3GPP TS 23.316, 3rd Generation Partnership Project (3GPP), Mobile Competence Centre ; 650, route des Lucioles ; F-06921 Sophia-Antipolis Cedex ; France, no. V0.2.0, 18 April 2019 (2019-04-18), pages 1-50, XP051723602, Mobile Competence Centre ; 650, route des Lucioles ; F-06921 Sophia-Antipolis Cedex ; France

## Description

### TECHNICAL FIELD

Embodiments of the present application relate to, but not limited to, the field of communication technologies, and in particular, to an information processing method and apparatus, and a computer-readable storage medium.

### BACKGROUND

The international standards organization Broadband Forum (BBF) and the 3rd Generation Partnership Project (3GPP) are collaborating on standardization in the field of Fixed Mobile Convergence (FMC). Functions related to a fixed communication network are mainly carried out in BBF, while required functions of a mobile communication network are carried out in 3GPP. The standardization is intended to realize deep convergence of the fixed communication network and the mobile communication network in terms of network structure and service level, and realize convergence communication between different types of access networks and core networks through complete decoupling of the access networks and the core networks.

CN108965159A relates to a service quality control method, device and system which can achieve QoS control when a fixed network accesses a 5G core network or other future networks. The method comprises the steps of: obtaining a corresponding relation of a QoS file and a virtual local area network (VLAN) priority by an access gateway functional entity, wherein the corresponding relation of the QoS file and the virtual local area network (VLAN) priority comprises a corresponding relation of a first QoS file and a first VLAN priority; sending a first message to a terminal by the access gateway functional entity, wherein the first message comprises the corresponding relation of the QoS file and the VLAN priority; receiving an uplink data packet from the terminal by the access gateway functional entity, wherein the QoS file corresponding to the uplink data packet is the first QoS file, and the uplink data packet carries the first VLAN priority; and performing QoS control for the uplink data packet by the access gateway functional entity according to the first VLAN priority.

"3rd Generation Partnership Project; Technical Specification Group Services and System Aspects; Wireless and wireline convergence access support for the 5G System (5GS) (Release 16)", 3GPP STANDARD; TECHNICAL SPECIFICATION; 3GPP TS 23.316, 3RD GENERATION PARTNERSHIP PROJECT (3GPP), MOBILE COMPETENCE CENTRE; 650, ROUTE DES LUCIOLES ; F-06921 SOPHIA-ANTIPOLIS CEDEX ; FRANCE, no. V16.0.0, 11 June 2019 (2019-06-11), pages 1 -63, XP051753951, relates to the enhancements to Stage 2 system architecture, procedure and flows, Policy and Charging Control for the 5G System defined in TS 23.501 [2], TS 23.502 [3] and TS 23.503 [4] in order to support wireline access network and Fixed Wireless Access. The specifications defined in TS 23.501 [2], TS 23.502 [3] and TS 23.503 [4] apply to the wireline access network and Fixed Wireless Access.

ERICSSON: "Procedures for 5G-RG", 3GPP DRAFT; S2-1901456_5WWC_23316_5G_RG_PROCEDURES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Santa Cruz, Tenerife, Spain; 20190225 -20190301 19 February 2019 (2019-02-19), XP051610066, relates to RM and SM procedures for 5G-RG.

### SUMMARY

The invention is set out in the appended set of claims.

The following is an overview of the subject matters described in detail herein. This overview is not intended to limit the protection scope of claims.

In a first aspect, according to some embodiments of the present application, an information processing method and apparatus, and a computer-readable storage medium are
provided, which can realize information forwarding between an access network function of a fixed network and a core network function of a mobile network.

In a second aspect, according to some embodiments of the present application, an information processing method is provided, applied to an access gateway, including: receiving a first message borne in a fixed network session, the first message including a data packet, a Quality of Service (QoS) parameter, and a fixed network session ID corresponding to the fixed network session; and mapping the fixed network session and a mobile network session according to the first message and pre-stored mapping information, so as to send the data packet in the first message to a User Plane Function (UPF).

In a third aspect, according to some embodiments of the present application, an information processing method is provided, applied to an access device, including: generating a first message including a data packet, a QoS parameter, and a fixed network session ID; and sending the first message to an access gateway based on a fixed network session corresponding to the fixed network session ID, and causing the access gateway to map the fixed network session and a mobile network session according to the first message and pre-stored mapping information that is stored in the access gateway, so as to send the data packet in the first message to a UPF.

In a fourth aspect, according to some embodiments of the present application, an information processing apparatus is provided, including: a memory, a processor, and a computer program stored in the memory and executable by the processor. The apparatus serves as an access gateway. The processor performs the information processing method as described in the second aspect when executing the computer program.

In a fifth aspect, according to some embodiments of the present application, an information processing apparatus is provided, including: a memory, a processor, and a computer program stored in the memory and executable by the processor. The apparatus serves as an access device. The processor performs the information processing method as described in the third aspect when executing the computer program.

In a sixth aspect, according to some embodiments of the present application, provided is a computer-readable storage medium storing computer-executable instructions which, when executed by a processor, cause the processor to carry out the information processing method as described above.

Other features and advantages of the present application will be set forth in part in the description which follows and in part will become apparent from the description or may be learned from practice of the present application. The objectives and other advantages of the present application may be realized and attained by the structure particularly pointed out in the description, claims and the accompanying drawings.

### BRIEF DESCRIPTION OF DRAWINGS

The drawings are provided for a further understanding of the technical schemes of the present application, and constitute a part of the description. The drawings and the embodiments of the present application serve to illustrate and not to limit the technical schemes of the present application.
FIG. 1 is a schematic frame diagram of a system architecture platform for performing an information processing method according to an embodiment of the present application;
FIG. 2 is a flowchart of an information processing method according to an embodiment of the present application;
FIG. 3 is a schematic diagram of a frame structure of a first message according to an embodiment of the present application;
FIG. 4 is a schematic diagram of a frame structure of a first message according to another embodiment of the present application;
FIG. 5 is a schematic diagram of a frame structure of a first message according to another embodiment of the present application;
FIG. 6 is a schematic diagram of a frame structure of a first message according to another embodiment of the present application;
FIG. 7 is a flowchart of an information processing method according to another embodiment of the present application;
FIG. 8 is a schematic diagram of an access gateway according to an embodiment of the present application; and
FIG. 9 is a schematic diagram of an access device according to an embodiment of the present application.

### DETAILED DESCRIPTION

In order to make objectives, technical schemes and advantages of the present application clearer, the present application is described in further detail below with reference to the drawings and embodiments. It is to be understood that specific embodiments described herein are intended only to illustrate and not to limit the present application.

It is to be noted that, although the division of functional modules is performed in the schematic diagram of the apparatus and a logic order is shown in the flowchart, in some cases, the shown or described steps may be executed by a different module division than in the apparatus or in a different order than shown in the flowchart. Terms such as "first" and "second" used in the description, claims and the drawings are intended to distinguish similar objects, but are not intended to describe a specific sequence or precedence order.

The present application provides an information processing method and apparatus and a computer-readable storage medium. An access device sends a first message borne in a fixed network session to an access gateway. The first message includes a data packet, a QoS parameter, and a fixed network session ID corresponding to the fixed network session. When the access gateway receives the first message, the access gateway may form a mapping rule according to pre-stored mapping information to map the first message, so that the fixed network session and a mobile network session can be mapped, so as to achieve a purpose of sending the data packet in the first message to a UPF. Therefore, information forwarding between an access network function of a fixed network and a core network function of a mobile network can be realized. In addition, since the first message includes the QoS parameter and the fixed network session ID corresponding to the fixed network session, the QoS parameter can also be forwarded between the access network function and the core network function, thereby ensuring the stability of data transmission between the access network function and the core network function.

The following is a further illustration of the embodiments of the present application with reference to the drawings.

The embodiments of the present application may be applied to a 5G FMC network or FMC system, such as a convergence network of a fixed network and a 5G communication system and a convergence network of a fixed network and a subsequently evolved mobile communication system.

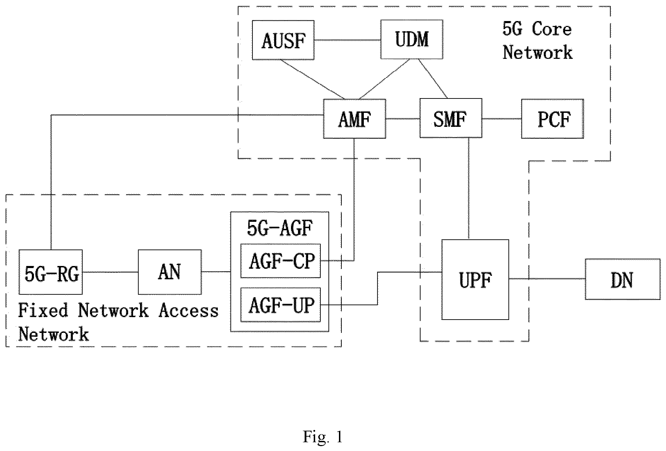

The embodiments of the present application are described by taking a convergence network of a fixed network and a 5G mobile communication system as an example. As shown in FIG. 1, FIG. 1 is a schematic frame diagram of a system architecture platform for performing an information processing method according to an embodiment of the present application. The system architecture platform includes a fixed network access network, a 5G core network, and a Data Network (DN) connected to the 5G core network. The fixed network access network may include an access device, an Access Node (AN), and an access gateway. The access device may include a Residential Gateway (RG) or a fixed network terminal device. The access gateway may include an Access Gateway Function (AGF). The AGF may include an AGF Control Plane (AGF-CP) function and an AGF User Plane (AGF-UP) function. The fixed network terminal device may be a server, a router, a switch, a network bridge, a computer, a user equipment, a terminal, a terminal device, a Set Top Box (STB), or the like.

The 5G core network may include a Control Plane (CP) function and a User Plane (UP) function. The CP function may be configured to deliver a data packet forwarding policy, a QoS control policy and so on, to a UP. The UP function may be responsible for grouped data packet forwarding, QoS control, charge information and so on. The CP function may include an Access and Mobility Management Function (AMF), a Session Management Function (SMF), an Authentication Server Function (AUSF), a Unified Data Management (UDM) function, and a Policy Control Function (PCF). The UP function may be referred to as a UPF. The AMF may be configured for a user's AMF. The SMF may be configured to manage creation and deletion of a user Protocol Data Unit (PDU) session and maintain PDU session context and user-plane forwarding pipe information. The AUSF may be configured for user access authorization. The UDM function may be configured to manage user subscription information. The PCF may be responsible for generating a policy for a user to establish a PDU session. The UPF may be configured to provide a user plane service for the user's PDU session, which is an interface gateway between a carrier network and an external network.

In the embodiment of the present application, a data transmission channel between the access device and the UPF may include a first data transmission channel and a second data transmission channel. The first data transmission channel may refer to a data transmission channel between the access device and the access gateway. The second data transmission channel may refer to a data transmission channel between the access gateway and the UPF. The first data transmission channel may also be referred to as a fixed network session, and the second data transmission channel may also be referred to as a mobile network session.

The embodiment of the present application is illustrated with an example in which the access device is a 5G Residential Gateway (5G-RG) and the access gateway is a 5G-AGF. When the 5G-AGF forwards a data packet sent by the 5G-RG to the UPF, the 5G-RG and the 5G-AGF may complete the following processes.
1. The 5G-RG has completed user registration and authentication to the 5G core network.
2. The 5G-RG sends PDU session link establishment request information to the 5G-AGF.
3. The 5G-AGF sends the PDU session link establishment request information to the corresponding AMF.
4. The AMF receives the PDU session link establishment request information, and returns a PDU session link establishment reception information to the 5G-AGF. At the same time, the AMF advertises fixed network session related information and mobile network session related information to the 5G-AGF. For example, the fixed network session related information includes a fixed network session ID, and the mobile network session related information includes a Tunnel Engineer ID and an IP address required by GPRS Tunnelling Protocol for the user plane (GTP-U) tunnel link establishment.
5. The 5G-AGF establishes a PDU session with the 5G-RG according to the fixed network session related information advertised by the AMF.

The network architecture and the application scenario described in the embodiment of the present application are intended to more clearly illustrate the technical scheme in the embodiment of the present application, and do not constitute limitations on the technical scheme according to the embodiment of the present application. Those having ordinary skills in the art may know that, with the evolution of the network architecture and the emergence of new application scenarios, the technical scheme according to the embodiment of the present application is also applicable to similar technical problems.

It may be understood by those having ordinary skills in the art that the network architecture shown in FIG. 1 does not limit the system architecture platform in the embodiment of the present application, which may include more or fewer components than those illustrated, or combine some components, or have a different component arrangement.

In the system architecture platform shown in FIG. 1, the access device may call an information processing program stored, and the access gateway may also call an information processing program stored. The access device and the access gateway cooperate with each other to perform the information processing method.

Based on the above system architecture platform, embodiments of the information processing method according to the present application are proposed.

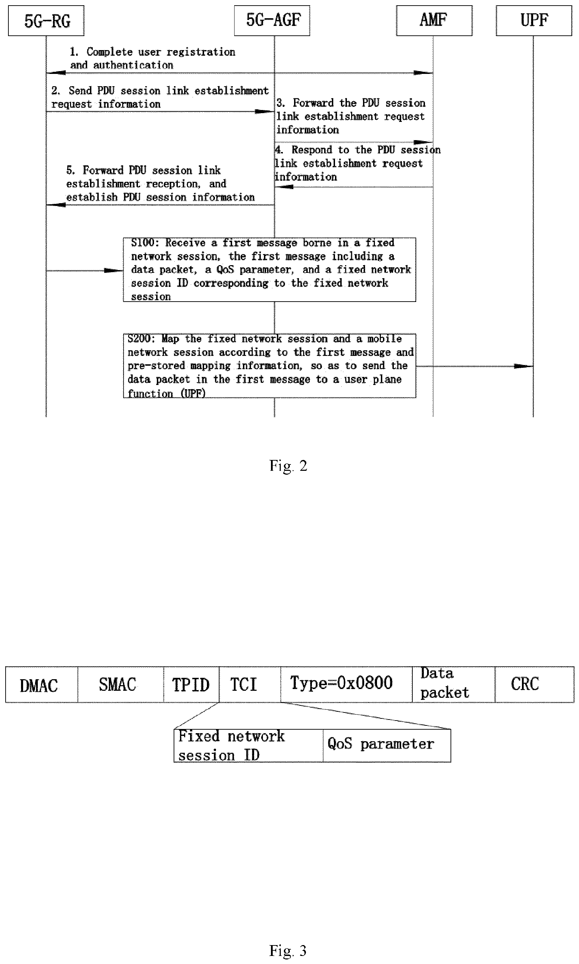

As shown in FIG. 2, FIG. 2 is a flowchart of an information processing method according to an embodiment of the present application. The information processing method may be applied to an access gateway. The information processing method includes, but is not limited to, steps S100 to S200.

At S100, a first message borne in a fixed network session is received, where the first message includes a data packet, a QoS parameter, and a fixed network session ID corresponding to the fixed network session.

At S200, the fixed network session and a mobile network session are mapped according to the first message and pre-stored mapping information, so as to send the data packet in the first message to a UPF.

In an embodiment, the first message may use an Ethernet frame format for data encapsulation. When the first message uses the Ethernet frame format for data encapsulation, referring to FIG. 3, the QoS parameter and the fixed network session ID corresponding to the fixed network session are data newly added to the Ethernet frame format. Therefore, when the access gateway receives the first message borne in the fixed network session, the access gateway may decapsulate the first message to obtain the data packet, the QoS parameter, and the fixed network session ID corresponding to the fixed network session. In this way, the access gateway may map and forward not only the data packet but also the QoS parameter, thereby ensuring the stability of data transmission between an access network function and a core network function.

In an embodiment, the fixed network session may be a fixed network PDU session. Compared with an Internet Protocol Security (IPsec) tunnel adopted in the existing 3GPP, the use of the fixed network PDU session may do not need to consider encapsulation of IPsec, decapsulation of IPsec, and creation of IPsec Security Association (IPsec SA). Therefore, implementation complexity of the access device can be reduced, and hardware requirements for the access device can be reduced.

In an embodiment, the QoS parameter may also be implemented in different manners. For example, the QoS parameter may include only a QoS Flow Identifier (QFI) configured to correspond to a different QoS stream, or include a QFI and a Reflective QoS Indication (RQI), which is not limited in the embodiment.

In an embodiment, a mapping rule for mapping the fixed network session and the mobile network session may be formed according to the pre-stored mapping information. The mapping rule may be a mapping table, or a mapping array, which is not limited in this embodiment.

In an embodiment, the pre-stored mapping information includes, but is not limited to, a pre-stored fixed network session ID, a pre-stored QoS parameter, a pre-stored mobile network session ID, and a pre-stored mobile network IP address. The pre-stored mapping information may be obtained by the AMF advertising the access gateway when the access gateway applies for PDU session link establishment to the AMF.

In an embodiment, for uplink data forwarding and transmission, after the access gateway receives the first message borne in the fixed network session, the access gateway may decapsulate the first message to obtain the data packet, the QoS parameter, and the fixed network session ID. Next, the access gateway searches and finds a corresponding pre-stored fixed network session ID in the pre-stored mapping information through the fixed network session ID obtained by decapsulation, or searches and finds a corresponding pre-stored fixed network session ID and a pre-stored QoS parameter in the pre-stored mapping information through the fixed network session ID and the QoS parameter. After that, the access gateway determines a pre-stored mobile network session ID of a GTP-U tunnel corresponding to the fixed network session and a pre-stored mobile network IP address according to the pre-stored fixed network session ID, pre-stored QoS parameter, pre-stored mobile network session ID and pre-stored mobile network IP address belonging to the same group in the pre-stored mapping information, so as to realize a mapping connection between the fixed network session and the mobile network session. Therefore, based on the mapping connection between the fixed network session and the mobile network session, the access gateway can send the data packet in the first message to the UPF. In addition, since the access gateway also maps and inherits the QoS parameter, the data packet transmitted in the mobile network session can retain the QoS parameter transmitted in the fixed network session, thereby ensuring stability and continuity of data transmission between the access network function and the core network function.

In an embodiment, for downlink data forwarding and transmission, after the access gateway receives downlink data sent by the UPF, the access gateway may first decapsulate the downlink data to parse out the TEID of the GTP-U tunnel on the core network side, query for an ID of a PDU session corresponding to the downlink data through the TEID, and then map the data to user plane transmission channel information between the access gateway and the access device. For example, if the PDU session between the access gateway and the access device uses a Generic Routing Encapsulation (GRE) tunnel for user plane data transmission, information of the GRE tunnel is correspondingly queried through the ID of the PDU session. If the PDU session between the access gateway and the access device adopts a format of an Ethernet frame for user plane data transmission, a Virtual Local Area Network ID (VLANID) in the Ethernet frame is correspondingly queried through the ID of the PDU session. In the embodiment, mapping from a data bearing tunnel on the core network side to a user plane data forwarding bearing tunnel on the access network side is completed by using the PDU session, thereby realizing interworking processing of user plane downlink data between the core network side and the access network side.

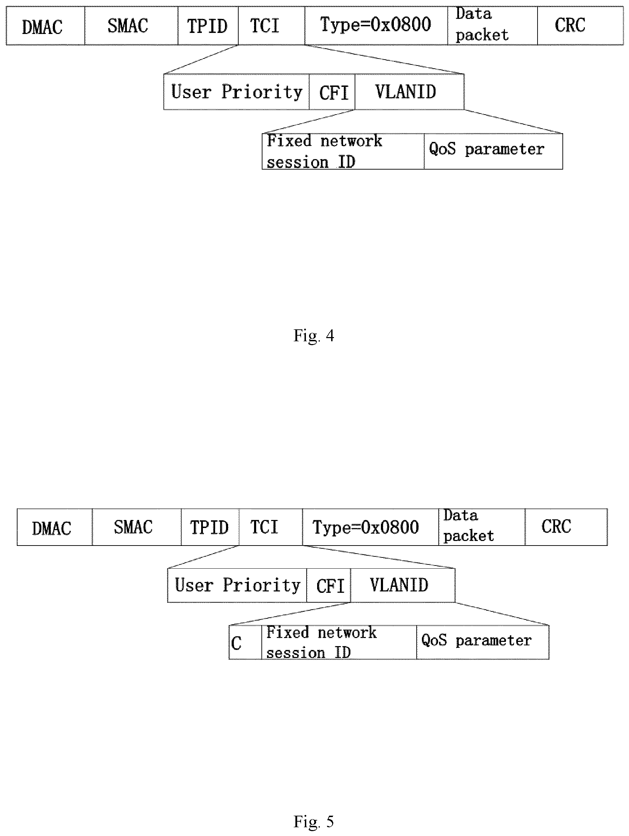

As shown in FIG. 4, in an embodiment, the first message adopts a format of an Ethernet frame for data encapsulation, and the QoS parameter and the fixed network session ID are mapped to VLANID fields in the Ethernet frame.

In an embodiment, the QoS parameter and the fixed network session ID are encapsulated into the Ethernet frame and mapped to VLANID fields in the Ethernet frame. When the access gateway receives the Ethernet frame, the access gateway decapsulates the Ethernet frame and correspondingly maps the VLANID fields to the QoS parameter and the fixed network session ID. That is, mapping to the GTP-U tunnel on the core network side may be performed according to the fixed network session ID, and a QoS parameter corresponding to the fixed network session ID may be carried through the GTP-U tunnel, which is sent to the UPF with the data packet, so that the UPF can send the data packet to a destination data network.

As shown in FIG. 5, in an embodiment, the first message further includes an ID information C field configured to map the QoS parameter to a QoS parameter carried in the fixed network session.

In an embodiment, the ID information C field is extended by the VLANID field in the first message in the format of the Ethernet frame. The ID information C field can map the QoS parameter in the VLANID field to the QoS parameter carried in the fixed network session. The value of the ID information C field may be 1 or 0. The value of the ID information C field being 1 indicates that the value of the QoS parameter mapped to the VLANID field is a QoS parameter corresponding to the PDU session. The QoS parameter corresponding to the PDU session can be obtained by parsing the QoS parameter in the first message, so as to be mapped to the QoS parameter of the GTP-U tunnel. The value of the ID information C field being 0 indicates that the PDU session for transmitting the first message does not carry a corresponding QoS parameter.

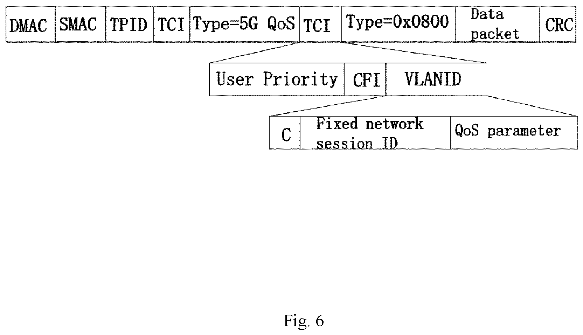

As shown in FIG. 6, in an embodiment, the first message further includes a type information Type field for indicating quality of a 5G-supporting service.

In an embodiment, the type information Type field for indicating the quality of the 5G-supporting service is extended by the VLANID field in the first message in the format of the Ethernet frame, so that a conflict between the extended VLANID field and a VLANID field on an existing transmission network can be prevented, so as to ensure the normal transmission of the first message. In addition, when mapping between the fixed network session and the mobile network session is required, the corresponding VLANID field can be found by searching for packet encapsulation with the type information Type field, so that the QoS parameter in the VLANID field can be obtained and easily mapped to the QoS parameter of the GTP-U tunnel.

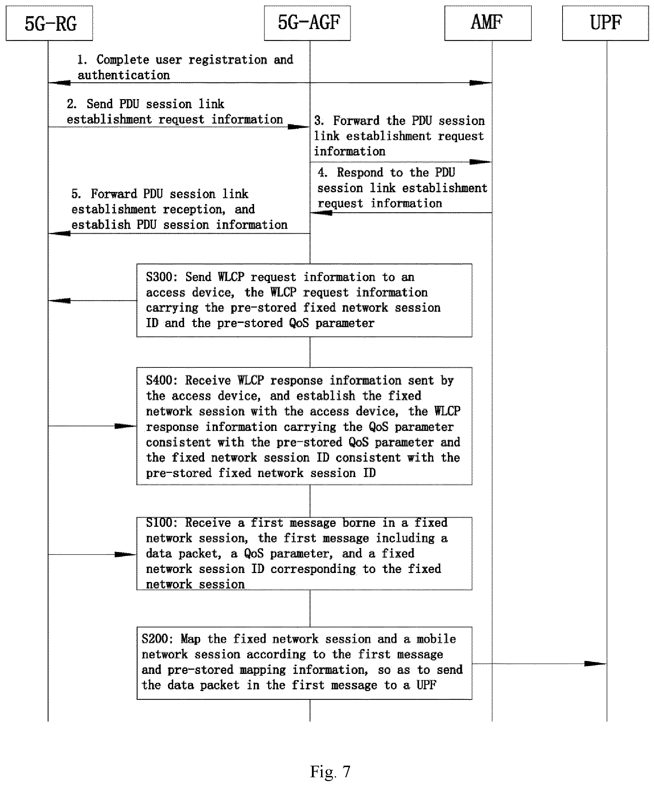

As shown in FIG. 7, in an embodiment, the information processing method further includes steps S300 to S400.

At S300, Wireless LAN Control Plane Protocol (WLCP) request information is sent to an access device, where the WLCP request information carries the pre-stored fixed network session ID and the pre-stored QoS parameter.

At S400, WLCP response information sent by the access device is received, and the fixed network session is established with the access device, where the WLCP response information carries the QoS parameter consistent with the pre-stored QoS parameter and the fixed network session ID consistent with the pre-stored fixed network session ID.

In the embodiment, it is to be understood that the control plane protocol may include a Wireless LAN Control Plane Protocol (WLCP) or other protocols that can transmit the first message to the access gateway.

In an embodiment, when the access device requests PDU session link establishment from the AMF through the access gateway, the access gateway may send WLCP request information to the access device. The WLCP is a protocol used between a terminal and a Trusted Wireless Access Gateway (TWAG) in a scenario of connection from a trusted Wireless Local Area Network (WLAN) access network to an Evolved Packet System (EPS), which is applicable to LTE protocols and configured to manage a PDU session from the terminal to the network. In the embodiment, a message type of the WLCP is extended, that is, the presence of the pre-stored fixed network session ID and the pre-stored QoS parameter in the WLCP request information is advertised, and the presence of a QoS parameter consistent with the pre-stored QoS parameter and a fixed network session ID consistent with the pre-stored fixed network session ID in the WLCP response information is advertised, so as to realize adaptation to PDU session management.

In an embodiment, the pre-stored fixed network session ID and the pre-stored QoS parameter are obtained by the AMF advertising the access gateway and stored in the access gateway to form part of the pre-stored mapping information.

In addition, in another embodiment, the information processing method further includes S500. S500 and S400 shown in FIG. 7 belong to parallel technical schemes. S500 includes the following contents.

At S500, in response to a session re-establishment request sent by the access device, an updated QoS parameter corresponding to the fixed network session ID and consistent with the QoS parameter is requested from an AMF, and the fixed network session is established with the access device according to the fixed network session ID and the updated QoS parameter.

In an embodiment, when the access gateway does not receive the WLCP response information sent by the access device, but receives the session re-establishment request sent by the access device, it indicates that the pre-stored QoS parameter sent by the access gateway to the access device does not conform with the resource processing policy of the access device. In this case, the access device may request PDU session link establishment again, and thus send, to the access gateway, a session re-establishment request carrying a resource parameter of the access device (i.e., the QoS parameter required by the access device), and the access gateway may, in respond to the session re-establishment request, request from the AMF an updated QoS parameter corresponding to the fixed network session ID and consistent with the QoS parameter. After the access gateway receives the updated QoS parameter sent by the AMF, the access gateway re-sends, to the access device, an updated QoS parameter carrying a pre-stored fixed network session ID consistent with the current fixed network session ID and conforming with the resource processing policy of the access device, so as to establish the fixed network session with the access device.

In addition, another embodiment of the present application further provides an information processing method. The information processing method is applied to an access device. The information processing method includes, but is not limited to, steps A100 to A200.

At A100, a first message including a data packet, a QoS parameter, and a fixed network session ID is generated.

At A200, the first message is sent to an access gateway based on a fixed network session corresponding to the fixed network session ID, and the access gateway is caused to map the fixed network session and a mobile network session according to the first message and pre-stored mapping information that is stored in the access gateway, so as to send the data packet in the first message to a UPF.

In an embodiment, the pre-stored mapping information includes, but is not limited to, a pre-stored fixed network session ID, a pre-stored QoS parameter, a pre-stored mobile network session ID, and a pre-stored mobile network IP address. The pre-stored mapping information may be obtained by the AMF advertising the access gateway after the access gateway applies for PDU session link establishment to the AMF. In addition, a mapping rule for mapping the fixed network session and the mobile network session may be formed according to the pre-stored mapping information. The mapping rule may be a mapping table, or a mapping array, which is not limited in this embodiment.

It is to be noted that both the information processing method applied to an access device in the embodiment mentioned above and the information processing method applied to an access gateway in the embodiment mentioned above are based on the same concept, with the only difference being that the focus is different. For example, the information processing method applied to an access device in the embodiment mentioned above focuses on the access device, while the information processing method applied to an access gateway in the embodiment mentioned above focuses on the access gateway. Therefore, both the two methods have the same beneficial effect. That is, when the access gateway receives the first message borne in the fixed network session, the access gateway may form a mapping rule according to pre-stored mapping information to map the first message, so that the fixed network session and a mobile network session can be mapped, so as to achieve a purpose of sending the data packet in the first message to a UPF. Therefore, information forwarding between an access network function of a fixed network and a core network function of a mobile network can be realized. In addition, since the two methods have similar principles and are different only in focuses, the principle of the information processing method applied to an access device in this embodiment is not described in detail herein.

In addition, in an embodiment, the first message adopts a format of an Ethernet frame for data encapsulation, and the QoS parameter and the fixed network session ID are mapped to VLANID fields in the Ethernet frame.

In an embodiment, the QoS parameter and the fixed network session ID are encapsulated into the Ethernet frame and mapped to VLANID fields in the Ethernet frame. When the Ethernet frame is sent to the access gateway, the access gateway decapsulates the Ethernet frame and correspondingly maps the VLANID fields to the QoS parameter and the fixed network session ID. That is, mapping to the GTP-U tunnel on the core network side may be performed according to the fixed network session ID, and a QoS parameter corresponding to the fixed network session ID may be carried through the GTP-U tunnel, which is sent to the UPF with the data packet, so that the UPF can send the data packet to a destination data network.

In addition, in an embodiment, the first message further includes ID information configured to map the QoS parameter to a QoS parameter carried in the fixed network session.

In an embodiment, the ID information C field is extended by using the VLANID field in the first message in the format of the Ethernet frame. The ID information C field can map the QoS parameter in the VLANID field to the QoS parameter carried in the fixed network session. The value of the ID information C field may be 1 or 0. The value of the ID information C field being 1 indicates that the value of the QoS parameter mapped to the VLANID field is a QoS parameter corresponding to the PDU session. The QoS parameter corresponding to the PDU session can be obtained by parsing the QoS parameter in the first message, so as to be mapped to the QoS parameter of the GTP-U tunnel. The value of the ID information C field being 0 indicates that the PDU session for transmitting the first message does not carry a corresponding QoS parameter.

In addition, in an embodiment, the first message further includes type information for indicating quality of a 5G-supporting service.

In an embodiment, the type information for indicating the quality of the 5G-supporting service is extended by the VLANID field in the first message in the format of the Ethernet frame, so that a conflict between the extended VLANID field and a VLANID field on an existing transmission network can be prevented, so as to ensure the normal transmission of the first message. In addition, when mapping between the fixed network session and the mobile network session is required, the corresponding VLANID field can be found by searching for packet encapsulation with the type information, so that the QoS parameter in the VLANID field can be obtained and easily mapped to the QoS parameter of the GTP-U tunnel.

In addition, in an embodiment, the information processing method further includes steps A300 to A400.

At A300, WLCP request information sent by the access gateway is received, where the WLCP request information carries the pre-stored fixed network session ID and the pre-stored QoS parameter.

At A400, WLCP response information is sent to the access gateway when the pre-stored QoS parameter conforms to the resource processing policy and the fixed network session is established with the access gateway, where the WLCP response information carries the QoS parameter and the fixed network session ID consistent with the pre-stored fixed network session ID.

In an embodiment, when the access device requests PDU session link establishment from the AMF through the access gateway, the access device may also receive the WLCP request information sent by the access device. The WLCP is a protocol used between a terminal and a TWAG in a scenario of connection from a trusted WLAN access network to an EPS, which is applicable to LTE protocols and configured to manage a PDU session from the terminal to the network. In the embodiment, a message type of the WLCP is extended, that is, the presence of the pre-stored fixed network session ID and the pre-stored QoS parameter in the WLCP request information is advertised, and the presence of the QoS parameter consistent with the pre-stored QoS parameter and the fixed network session ID consistent with the pre-stored fixed network session ID in the WLCP response information is advertised, so as to realize adaptation to PDU session management.

In an embodiment, the pre-stored fixed network session ID and the pre-stored QoS parameter are obtained by the AMF advertising the access gateway and stored in the access gateway to form part of the pre-stored mapping information.

In addition, in another embodiment, the information processing method further includes step A500. A500 and A400 in the above embodiment belong to parallel technical schemes. A500 includes the following contents.

At A500, when the pre-stored QoS parameter does not conform with the resource processing policy, a session re-establishment request is sent to the access gateway to cause the access gateway to request, from an access and mobility management function, an updated QoS parameter corresponding to the fixed network session ID and consistent with the QoS parameter, and the fixed network session is established with the access gateway according to the fixed network session ID and the updated QoS parameter.

In an embodiment, when the pre-stored QoS parameter received by the access device does not conform with the resource processing policy of the access device, the access device may request PDU session link establishment again and send, to the access gateway, a session re-establishment request carrying a resource parameter of the access device (i.e., the QoS parameter required by the access device). The access gateway may, in respond to the session re-establishment request, request from the AMF an updated QoS parameter corresponding to the fixed network session ID and consistent with the QoS parameter. After the access gateway receives the updated QoS parameter sent by the AMF, the access gateway re-sends, to the access device, an updated QoS parameter carrying a pre-stored fixed network session ID consistent with the current fixed network session ID and conforming with the resource processing policy of the access device, so that the access device can establish the fixed network session with the access gateway.

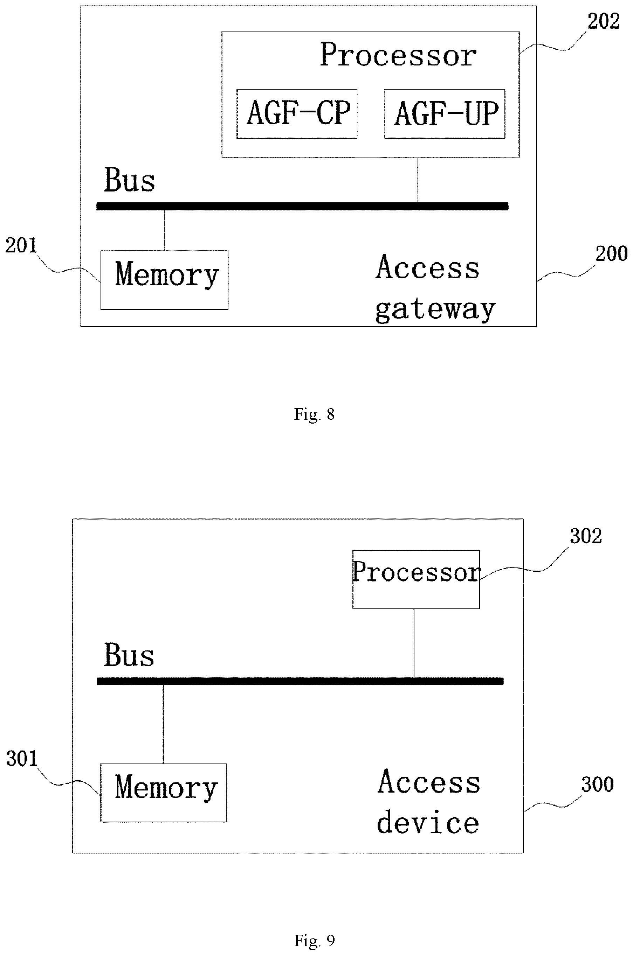

Referring to FIG. 8, an embodiment of the present application provides an information processing apparatus. The apparatus serves as an access gateway 200.

The access gateway 200 includes: a memory 201, a processor 202, and computer programs stored in the memory 201 and executable by the processor 202. Moreover, the processor 202 is constructed with an AGF-CP and an AGF-UP.

The processor 202 and the memory 201 may be connected by a bus or in other manners. The connection by a bus is taken as an example in FIG. 8.

It is to be noted that the access gateway 200 in this embodiment and the system architecture platform in the embodiment shown in FIG. 1 are based on the same concept. The access gateway 200 in this embodiment can constitute part of the system architecture platform in the embodiment shown in FIG. 1. Therefore, both have the same implementation principles and beneficial effects, which are not described in detail herein.

Non-transient software programs and instructions required to implement the information processing method applied to an access gateway in the above embodiments are stored in the memory 201 which, when executed by the processor 202, cause the processor 202 to carry out the information processing method applied to an access gateway in the above embodiment. For example, steps S100 to S200 of the method in FIG. 2 or steps S300 to S400 of the method in FIG. 7 described above are performed.

Referring to FIG. 9, another embodiment of the present application provides an information processing apparatus. The apparatus serves as an access device 300. The access device 300 may be any type of access device, such as a server, a router, a switch, a network bridge, a computer, a user equipment, a terminal, a terminal device or an STB.

The access device 300 includes: a memory 301, a processor 302, and a computer program stored in the memory 301 and executable by the processor 302.

The processor 302 and the memory 301 may be connected by a bus or in other manners. The connection by a bus is taken as an example in FIG. 9.

It is to be noted that the access device 300 in this embodiment and the system architecture platform in the embodiment shown in FIG. 1 are based on the same concept. The access device 300 in this embodiment can constitute part of the system architecture platform in the embodiment shown in FIG. 1. Therefore, both have the same implementation principles and beneficial effects, which are not described in detail herein.

Non-transient software programs and instructions required to implement the information processing method applied to an access device in the above embodiments are stored in the memory 301 which, when executed by the processor 302, cause the processor 302 to carry out the information processing method applied to an access device in the above embodiment. For example, steps A100 to A200 of the method or steps A300 to A400 of the method described above are performed.

It is to be noted that, in the embodiment as shown in FIG. 8 and the embodiment as shown in FIG. 9, the memory 201 and the memory 301 each serve as a non-transient computer-readable storage medium, and may be configured to store non-transient software programs and non-transient computer-executable programs respectively. In addition, the memory 201 and the memory 301 may each include a high-speed random-access memory (RAM), and may also include a non-transient memory, such as at least one disk storage device, a flash memory device, or other non-transient solid-state storage devices. In some implementations, the memory 201 may include memories remotely arranged relative to the processor 202. The remote memories may be connected to the access gateway 200 over a network. In some other implementations, the memory 301 may include memories remotely arranged relative to the processor 302. The remote memories may be connected to the access device 300 over a network. Examples of the network include, but are not limited to, the Internet, Intranet, a local area network, a mobile communication network, and combinations thereof.

The apparatus embodiments described above are only illustrative. The units described as separate parts may or may not be physically separate, that is, may be located in one place, or may be distributed over multiple network units. Some or all of the modules may be selected according to actual needs to achieve the objectives of the schemes of the embodiments.

In addition, an embodiment of the present application further provides a computer-readable storage medium. The computer-readable storage medium stores computer-executable instructions which, when executed by a processor or controller, for example, by a processor 202 in FIG. 8, cause the processor 202 to carry out the information processing method applied to an access gateway in the above embodiment, for example, steps S100 to S200 of the method in FIG. 2 or steps S300 to S400 of the method in FIG. 7 described above. In another example, the computer-executable instructions, when executed by a processor 302 in FIG. 9, cause the processor 302 to carry out the information processing method applied to an access device in the above embodiment, for example, steps A100 to A200 of the method or steps A300 to A400 of the method described above.

According to the embodiments of the present application, an access gateway receives a first message borne in a fixed network session, the first message including a data packet, a QoS parameter, and a fixed network session ID corresponding to the fixed network session. Therefore, the access gateway may map the fixed network session and a mobile network session according to the first message and pre-stored mapping information, so as to send the data packet in the first message to a UPF. Based on the schemes according to the embodiments of the present application, when the access gateway receives the first message borne in the fixed network session, the access gateway may form a mapping rule according to pre-stored mapping information to map the first message, so that the fixed network session and a mobile network session can be mapped, achieving a purpose of sending the data packet in the first message to a UPF. Therefore, information forwarding between an access network function of a fixed network and a core network function of a mobile network can be realized. In addition, since the first message includes the QoS parameter and the fixed network session ID corresponding to the fixed network session, the QoS parameter can also be forwarded between the access network function and the core network function, thereby ensuring the stability of data transmission between the access network function and the core network function.

Those having ordinary skills in the art may understand that all or some of the steps in the method and the system disclosed above may be implemented as software, firmware, hardware and appropriate combinations thereof. Some or all of the physical components may be implemented as software executed by a processor such as a central processing unit, a digital signal processor or a microprocessor, or may be implemented as hardware, or may be implemented as an integrated circuit such as an application-specific integrated circuit. Such software may be distributed on a computer-readable medium, which may include a computer storage medium (or non-transitory medium) and a communication medium (or a transitory medium). As is well known to those having ordinary skills in the art, the term "computer storage medium" includes volatile and nonvolatile, removable and non-removable media implemented in any method or technology for storing information (such as computer-readable instructions, data structures, program modules, or other data). The computer storage medium includes, but is not limited to, an RAM, a read-only memory (ROM), an electrically erasable programmable read-only memory (EEPROM), a flash memory or other memory technologies, a compact disc read-only memory (CD-ROM), a digital versatile disk (DVD) or other optical storage, magnetic cassette, magnetic tape, magnetic disk storage or other magnetic storage apparatuses, or any other media that can be used for storing desired information and can be accessed by a computer. Besides, as is well known to those having ordinary skill in the art, the communication medium typically includes computer-readable instructions, data structures, program modules or other data in a modulated data signal such as a carrier wave or other transport mechanisms, and may include any information delivery medium.

## Claims

1. An information processing method, applied to an access gateway, comprising:
receiving (S100) a first message borne in a fixed network session, the first message comprising a data packet, a Quality of Service, QoS, parameter, and a fixed network session ID corresponding to the fixed network session; and
mapping (S200) the fixed network session and a mobile network session according to the first message and pre-stored mapping information, so as to send the data packet in the first message to a User Plane Function, UPF;
wherein the pre-stored mapping information comprises a pre-stored fixed network session ID, a pre-stored QoS parameter, a pre-stored mobile network session ID, and a pre-stored mobile network IP address;
sending Control Plane Protocol request information to an access device, the Control Plane Protocol request information carrying the pre-stored fixed network session ID and the pre-stored QoS parameter; and
either receiving Control Plane Protocol response information sent by the access device, and establishing the fixed network session with the access device, the Control Plane Protocol response information carrying the QoS parameter consistent with the pre-stored QoS parameter and the fixed network session ID consistent with the pre-stored fixed network session ID,
or
in response to a session re-establishment request sent by the access device, requesting, from an access and mobility management function, AMF, an updated QoS parameter corresponding to the fixed network session ID and consistent with the QoS parameter, and establishing the fixed network session with the access device according to the fixed network session ID and the updated QoS parameter.

2. The information processing method of claim 1, wherein the first message adopts a format of an Ethernet frame, and the QoS parameter and the fixed network session ID are mapped to a Virtual Local Area Network ID, VLANID, in the Ethernet frame.

3. The information processing method of claim 1 or 2, wherein the first message further comprises ID information for mapping the QoS parameter to a QoS parameter carried in the fixed network session.

4. The information processing method of claim 1 or 2, wherein the first message further comprises type information for indicating quality of a 5G-supporting service.

5. An information processing method, applied to an access device, comprising:
generating a first message comprising a data packet, a Quality of Service, QoS, parameter, and a fixed network session ID; and
sending the first message to an access gateway based on a fixed network session corresponding to the fixed network session ID, and causing the access gateway to map the fixed network session and a mobile network session according to the first message and pre-stored mapping information stored in the access gateway, so as to send the data packet in the first message to a User Plane Function, UPF;
wherein the pre-stored mapping information comprises a pre-stored fixed network session ID, a pre-stored QoS parameter, a pre-stored mobile network session ID, and a pre-stored mobile network IP address;
receiving Control Plane Protocol request information sent by the access gateway, the control plane protocol request information carrying the pre-stored fixed network session ID and the pre-stored QoS parameter; and
performing one of the following according to the pre-stored QoS parameter and a stored resource processing policy:
in response to the pre-stored QoS parameter conforming with the resource processing policy, sending Control Plane Protocol response information to the access gateway and establishing the fixed network session with the access gateway, the Control Plane Protocol response information carrying the QoS parameter and the fixed network session ID consistent with the pre-stored fixed network session ID; or
in response to the pre-stored QoS parameter not conforming with the resource processing policy, sending a session re-establishment request to the access gateway, causing the access gateway to request, from an AMF, an updated QoS parameter corresponding to the fixed network session ID and consistent with the QoS parameter, receiving from the access gateway the updated QoS parameter, and establishing the fixed network session with the access gateway according to the fixed network session ID and the updated QoS parameter.

6. The information processing method of claim 5, wherein the first message adopts a format of an Ethernet frame, and the QoS parameter and the fixed network session ID are mapped to a Virtual Local Area Network ID, VLANID, in the Ethernet frame.

7. The information processing method of claim 5 or 6, wherein the first message further comprises ID information for mapping the QoS parameter to a QoS parameter carried in the fixed network session.

8. The information processing method of claim 5 or 6, wherein the first message further comprises type information for indicating quality of a 5G-supporting service.

9. An information processing apparatus, comprising: a memory (201), a processor (202), and computer programs stored in the memory (201) and executable by the processor (202), wherein the apparatus serves as an access gateway (200), and the computer programs, when executed by the processor (202), cause the processor (202) to carry out the information processing method of any one of claims 1 to 4.

10. An information processing apparatus, comprising: a memory (301), a processor (302), and computer programs stored in the memory (301) and executable by the processor (302), wherein the apparatus serves as an access device (300), and the computer programs, when executed by the processor (302), cause the processor (302) to carry out the information processing method of any one of claims 5 to 8.

11. A computer-readable storage medium, storing computer-executable instructions which, when executed by a processor, cause the processor to carry out the information processing method of any one of claims 1 to 4 or the information processing method of any one of claims 5 to 8.

## Patentansprüche

1. Informationsverarbeitungsverfahren, angewandt auf ein Zugangs-Gateway, umfassend:
Empfangen (S100) einer ersten Nachricht, die in einer Festnetzsitzung übertragen wird, die erste Nachricht umfassend ein Datenpaket, einen Parameter für Dienstgüte, QoS, und eine Festnetzsitzungs-ID, die der Festnetzsitzung entspricht; und
Zuordnen (S200) der Festnetzsitzung und einer Mobilfunknetzsitzung gemäß der ersten Nachricht und vorgespeicherten Zuordnungsinformationen, um das Datenpaket in der ersten Nachricht an eine Benutzerebenenfunktion, UPF, zu senden;
wobei die vorgespeicherten Zuordnungsinformationen eine vorgespeicherte Festnetzsitzungs-ID, einen vorgespeicherten QoS-Parameter, eine vorgespeicherte Mobilfunknetzsitzungs-ID und eine vorgespeicherte Mobilfunknetz-IP-Adresse umfassen; Senden von Steuerebenenprotokoll-Anforderungsinformationen an eine Zugangsvorrichtung, wobei die Steuerebenenprotokoll-Anforderungsinformationen die vorgespeicherte Festnetzsitzungs-ID und den vorgespeicherten QoS-Parameter tragen; und entweder
Empfangen von Steuerebenenprotokoll-Antwortinformationen, die von der Zugangsvorrichtung gesendet werden, und Aufbauen der Festnetzsitzung mit der Zugangsvorrichtung, wobei die Steuerebenenprotokoll-Antwortinformationen den QoS-Parameter, der mit dem vorgespeicherten QoS-Parameter übereinstimmt, und die Festnetzsitzungs-ID, die mit der vorgespeicherten Festnetzsitzungs-ID übereinstimmt, tragen, oder
als Reaktion auf eine von der Zugangsvorrichtung gesendete Sitzungswiederherstellungsanforderung, Anfordern, von einer Zugangs- und Mobilitätsverwaltungsfunktion, AMF, eines aktualisierten QoS-Parameters, der der Festnetzsitzungs-ID entspricht und mit dem QoS-Parameter konsistent ist, und Aufbauen der Festnetzsitzung mit der Zugangsvorrichtung gemäß der Festnetzsitzungs-ID und dem aktualisierten QoS-Parameter.

2. Informationsverarbeitungsverfahren nach Anspruch 1, wobei die erste Nachricht ein Format eines Ethernet-Frames annimmt und der QoS-Parameter und die Festnetzsitzungs-ID zu einer Virtual Local Area Network ID, VLANID, in dem Ethernet-Frame zugeordnet werden.

3. Informationsverarbeitungsverfahren nach Anspruch 1 oder 2, wobei die erste Nachricht ferner ID-Informationen zum Zuordnen des QoS-Parameters zu einem in der Festnetzsitzung übertragenen QoS-Parameter umfasst.

4. Informationsverarbeitungsverfahren nach Anspruch 1 oder 2, wobei die erste Nachricht ferner Typinformationen zum Angeben einer Qualität eines 5G-unterstützenden Dienstes umfasst.

5. Informationsverarbeitungsverfahren, angewandt auf eine Zugangsvorrichtung, umfassend:
Erzeugen einer ersten Nachricht, umfassend ein Datenpaket, einen Parameter für Dienstgüte, QoS, und eine Festnetzsitzungs-ID; und
Senden der ersten Nachricht an ein Zugangs-Gateway basierend auf einer Festnetzsitzung, die der Festnetzsitzungs-ID entspricht, und Veranlassen des Zugangs-Gateways, die Festnetzsitzung und eine Mobilfunknetzsitzung gemäß der ersten Nachricht und vorgespeicherter Zuordnungsinformationen, die in dem Zugangs-Gateway gespeichert sind, zuzuordnen, um das Datenpaket in der ersten Nachricht an eine Benutzerebenenfunktion, UPF, zu senden;
wobei die vorgespeicherten Zuordnungsinformationen eine vorgespeicherte Festnetzsitzungs-ID, einen vorgespeicherten QoS-Parameter, eine vorgespeicherte Mobilfunknetzsitzungs-ID und eine vorgespeicherte Mobilfunknetz-IP-Adresse umfassen; Empfangen von Steuerebenenprotokoll-Anforderungsinformationen, die von dem Zugangs-Gateway gesendet werden, wobei die Steuerebenenprotokoll-Anforderungsinformationen die vorgespeicherte Festnetzsitzungs-ID und den vorgespeicherten QoS-Parameter tragen; und
Durchführen eines der Folgenden gemäß dem vorgespeicherten QoS-Parameter und einer gespeicherten Ressourcenverarbeitungsrichtlinie:
als Reaktion darauf, dass der vorgespeicherte QoS-Parameter mit der Ressourcenverarbeitungspolitik übereinstimmt, Senden von Steuerebenenprotokoll-Antwortinformationen an das Zugangs-Gateway und Aufbauen der Festnetzsitzung mit dem Zugangs-Gateway, wobei die Steuerebenenprotokoll-Antwortinformationen den QoS-Parameter und die Festnetzsitzungs-ID tragen, die mit der vorgespeicherten Festnetzsitzungs-ID übereinstimmen; oder
als Reaktion darauf, dass der vorgespeicherte QoS-Parameter nicht mit der Ressourcenverarbeitungsrichtlinie übereinstimmt, Senden einer Sitzungswiederherstellungsanforderung an das Zugangs-Gateway, Veranlassen des Zugangs-Gateways, von einer AMF einen aktualisierten QoS-Parameter anzufordern, der der Festnetzsitzungs-ID entspricht und mit dem QoS-Parameter übereinstimmt, Empfangen des aktualisierten QoS-Parameters von dem Zugangs-Gateway und Aufbauen der Festnetzsitzung mit dem Zugangs-Gateway gemäß der Festnetzsitzungs-ID und dem aktualisierten QoS-Parameter.

6. Informationsverarbeitungsverfahren nach Anspruch 5, wobei die erste Nachricht ein Format eines Ethernet-Frames annimmt und der QoS-Parameter und die Festnetzsitzungs-ID zu einer Virtual Local Area Network ID, VLANID, in dem Ethernet-Frame zugeordnet werden.

7. Informationsverarbeitungsverfahren nach Anspruch 5 oder 6, wobei die erste Nachricht ferner ID-Informationen zum Zuordnen des QoS-Parameters zu einem in der Festnetzsitzung übertragenen QoS-Parameter umfasst.

8. Informationsverarbeitungsverfahren nach Anspruch 5 oder 6, wobei die erste Nachricht ferner Typinformationen zum Angeben einer Qualität eines 5G-unterstützenden Dienstes umfasst.

9. Informationsverarbeitungsvorrichtung, umfassend: einen Speicher (201), einen Prozessor (202) und Computerprogrammen, die in dem Speicher (201) gespeichert und durch den Prozessor (202) ausführbar sind, wobei das Gerät als Zugangs-Gateway (200) dient und die Computerprogramme, wenn sie durch den Prozessor (202) ausgeführt werden, den Prozessor (202) veranlassen, das Informationsverarbeitungsverfahren nach einem der Ansprüche 1 bis 4 durchzuführen.

10. Informationsverarbeitungsvorrichtung, umfassend: einen Speicher (301), einen Prozessor (302) und Computerprogrammen, die in dem Speicher (301) gespeichert und durch den Prozessor (302) ausführbar sind, wobei das Gerät als Zugangs-Vorrichtung (300) dient und die Computerprogramme, wenn sie durch den Prozessor (302) ausgeführt werden, den Prozessor (302) veranlassen, das Informationsverarbeitungsverfahren nach einem der Ansprüche 5 bis 8 durchzuführen.

11. Computerlesbares Speichermedium, das computerausführbare Anweisungen speichert, die, wenn sie von einem Prozessor ausgeführt werden, den Prozessor veranlassen, das Informationsverarbeitungsverfahren nach einem der Ansprüche 1 bis 4 oder das Informationsverarbeitungsverfahren nach einem der Ansprüche 5 bis 8 durchzuführen.

## Revendications

1. Procédé de traitement d'informations appliqué à une passerelle d'accès, comprenant :
la réception (S100) d'un premier message transmis par une session de réseau fixe, le premier message comprenant un paquet de données, un paramètre de qualité de service, QoS, et un ID de session de réseau fixe correspondant à la session de réseau fixe ; et
la cartographie (S200) de la session de réseau fixe et d'une session de réseau mobile en fonction du premier message et des informations de cartographie pré-enregistrées, afin d'envoyer le paquet de données du premier message à une Fonction de Plan d'Utilisateur (UPF) ;
dans lequel les informations de cartographie pré-enregistrées comprennent un ID de session de réseau fixe pré-enregistré, un paramètre QoS pré-enregistré, un ID de session de réseau mobile pré-enregistré et une adresse IP de réseau mobile pré-enregistrée ;
l'envoi d'informations de demande de Protocole de Plan de Contrôle à un dispositif d'accès, les informations de demande de Protocole de Plan de Contrôle contenant l'ID de session de réseau fixe pré-enregistré et le paramètre QoS pré-enregistré ; et
soit
la réception d'informations de réponse au Protocole de Plan de Contrôle envoyées par le dispositif d'accès, et l'établissement de la session de réseau fixe avec le dispositif d'accès, les informations de réponse au Protocole de Plan de Contrôle contenant le paramètre QoS compatible avec le paramètre QoS pré-enregistré et l'ID de session de réseau fixe compatible avec l'ID de session de réseau fixe pré-enregistré,
soit
en réponse à une demande de rétablissement de session envoyée par le dispositif d'accès, la demande, auprès d'une fonction de gestion de l'accès et de la mobilité, AMF, d'un paramètre QoS actualisé correspondant à l'ID de session de réseau fixe et compatible avec le paramètre QoS, et l'établissement de la session de réseau fixe avec le dispositif d'accès en fonction de l'ID de session de réseau fixe et du paramètre QoS actualisé.

2. Procédé de traitement d'informations selon la revendication 1, dans lequel le premier message adopte un format de trame Ethernet, et le paramètre QoS et l'ID de session du réseau fixe sont mis en correspondance avec un ID de réseau local virtuel, VLANID, dans la trame Ethernet.

3. Procédé de traitement d'informations selon la revendication 1 ou 2, dans lequel le premier message comprend en outre des informations d'ID permettant de mettre en correspondance le paramètre QoS avec un paramètre QoS transporté dans la session du réseau fixe.

4. Procédé de traitement d'informations selon la revendication 1 ou 2, dans lequel le premier message comprend en outre des informations de type permettant d'indiquer la qualité d'un service prenant en charge la 5G.

5. Procédé de traitement d'informations appliqué à un dispositif d'accès, comprenant :
la génération d'un premier message comprenant un paquet de données, un paramètre QoS et un ID de session de réseau fixe ; et
l'envoi du premier message à une passerelle d'accès sur la base d'une session de réseau fixe correspondant à l'ID de session de réseau fixe, et la mise en correspondance par la passerelle d'accès de la session de réseau fixe et d'une session de réseau mobile en fonction du premier message et des informations de mise en correspondance pré-enregistrées dans la passerelle d'accès, afin d'envoyer le paquet de données du premier message à une Fonction du Plan Utilisateur (User Plane Function, UPF) ;
dans lequel les informations de mise en correspondance pré-enregistrées comprennent un ID de session de réseau fixe pré-enregistré, un paramètre QoS pré-enregistré, un ID de session de réseau mobile pré-enregistré et une adresse IP de réseau mobile pré-enregistrée ;
la réception d'informations de demande de Protocole de Plan de Contrôle envoyées par la passerelle d'accès, les informations de demande de Protocole de Plan de Contrôle contenant l'ID de session de réseau fixe pré-enregistré et le paramètre QoS pré-enregistré ; et
l'exécution de l'une des opérations suivantes en fonction du paramètre QoS pré-enregistré et d'une politique de traitement des ressources enregistrée :
en réponse au paramètre QoS pré-enregistré conforme à la politique de traitement des ressources, l'envoi des informations de réponse du Protocole du Plan de Contrôle à la passerelle d'accès et l'établissement de la session de réseau fixe avec la passerelle d'accès, les informations de réponse du Protocole du Plan de Contrôle contenant le paramètre QoS et l'ID de session de réseau fixe conforme à l'ID de session de réseau fixe pré-enregistré ; ou
en réponse à la non-conformité du paramètre QoS pré-enregistré avec la politique de traitement des ressources, l'envoi d'une demande de rétablissement de session à la passerelle d'accès, la demande par la passerelle d'accès à un AMF d'un paramètre QoS actualisé correspondant à l'ID de session du réseau fixe et compatible avec le paramètre QoS, la réception par la passerelle d'accès du paramètre QoS actualisé, et l'établissement de la session du réseau fixe avec la passerelle d'accès en fonction de l'identifiant de session du réseau fixe ID et du paramètre QoS actualisé.

6. Procédé de traitement d'informations selon la revendication 5, dans lequel le premier message adopte un format de trame Ethernet, et le paramètre QoS et l'ID de session du réseau fixe sont mis en correspondance avec un ID de réseau local virtuel, VLANID, dans la trame Ethernet.

7. Procédé de traitement d'informations selon la revendication 5 ou 6, dans lequel le premier message comprend en outre des informations d'ID permettant de mettre en correspondance le paramètre QoS avec un paramètre QoS transporté dans la session du réseau fixe.

8. Procédé de traitement d'informations selon la revendication 5 ou 6, dans lequel le premier message comprend en outre des informations de type permettant d'indiquer la qualité d'un service prenant en charge la 5G.

9. Appareil de traitement d'informations, comprenant : une mémoire (201), un processeur (202), et des programmes informatiques stockés dans la mémoire (201) et exécutables par le processeur (202), dans lequel l'appareil sert de passerelle d'accès (200), et les programmes informatiques (202), lorsqu'ils sont exécutés par le processeur, amènent le processeur (202) à mettre en oeuvre le procédé de traitement d'informations selon l'une quelconque des revendications 1 à 4.

10. Appareil de traitement d'informations, comprenant : une mémoire (301), un processeur (302), et des programmes informatiques stockés dans la mémoire (301) et exécutables par le processeur (302), dans lequel l'appareil sert de dispositif d'accès (300), et les programmes informatiques, lorsqu'ils sont exécutés par le processeur (302), amènent le processeur (302) à mettre en oeuvre le procédé de traitement d'informations selon l'une quelconque des revendications 5 à 8.

11. Support de stockage lisible par ordinateur, stockant des instructions exécutables par ordinateur qui, lorsqu'elles sont exécutées par un processeur, amènent ce dernier à mettre en oeuvre le procédé de traitement d'informations selon l'une quelconque des revendications 1 à 4 ou le procédé de traitement d'information selon l'une quelconque des revendications 5 à 8.
